# EUROPÄISCHE PATENTANMELDUNG

(11) **EP 1 256 778 A1**
(43) Veröffentlichungstag der Anmeldung: **13.11.2002**
(21) Anmeldenummer: 02008349.9
(22) Anmeldetag: 12.04.2002
(51) Int. Cl.: G01B 7/30, G01D 5/16

(54) **Winkelgeber**

(30) Priorität: 08.05.2001 DE 10122277
(71) Anmelder: Dr. Fritz Faulhaber GmbH & Co. KG Feinmechanische Werkstätten, 71101 Schönaich (DE)
(72) Erfinder: Wallner, Herbert, 71101 Schönaich (DE); Dupraz, Roberto, 6932 Breganova (CH)
(74) Vertreter: Jackisch-Kohl, Anna-Katharina

(57) **Zusammenfassung**

Der Winkelgeber wird in elektrische Kleinmotoren integriert und dient zur exakten Regelung der Drehzahl und Drehrichtung sowie der genauen Positionierung der kleinen Motoren. Der Winkelgeber hat ein Magnetteil (2), das stirnseitig abwechselnd angeordnete Pole aufweist. Dem Magnetteil (2) liegt ein Sensor (3) gegenüber. Der Winkelgeber liefert phasenverschobene Signale. Da der Sensor (3) zwei Sensorelemente aufweist, die winklig zueinander liegen, ermöglicht der Winkelgeber bei kleiner Baugröße eine hohe Auflösung. Der Sensor (3) liefert phasenverschobene hochwertige Signale, die eine hohe Winkelgenauigkeit ergeben. Die Sensorelemente (3) können sehr kleine Abmessungen haben, so daß der Winkelgeber insgesamt sehr kompakt ausgebildet ist.

## Beschreibung

Die Erfindung betrifft einen Winkelgeber nach dem Oberbegriff des Anspruches 1.

Der Winkelgeber hat ein drehfest mit einer Motorwelle verbundenes Magnetteil und ermöglicht die genaue Regelung der Drehzahl und Drehrichtung der Motorwelle sowie eine Positionierung des Motors. Je kleiner die Motoren sind, für welche der Winkelgeber eingesetzt werden soll, desto problematischer ist es, bei vernünftigem Aufwand eine hohe Genauigkeit zu erzielen.

Der Erfindung liegt die Aufgabe zugrunde, den gattungsgemäßen Winkelgeber so auszubilden, daß er bei kleiner Baugröße eine hohe Auflösung ermöglicht.

Diese Aufgabe wird beim gattungsgemäßen Winkelgeber erfindungsgemäß mit den kennzeichnenden Merkmalen des Anspruches 1 gelöst.

Beim erfindungsgemäßen Winkelgeber ist der Sensor mit wenigstens zwei Sensorelementen versehen, die winklig zueinander liegen. Der Sensor liefert dementsprechend phasenverschobene hochwertige Signale, die eine hohe Winkelgenauigkeit ergeben. Der erfindungsgemäße Winkelgeber ermöglicht darüber hinaus eine hohe Auflösung. Die Sensorelemente können sehr kleine Abmessungen haben, so daß der Winkelgeber insgesamt sehr kompakt ausgebildet sein kann. Er eignet sich darum bevorzugt für Kleinmotoren, die beispielsweise einen Außendurchmesser von nur etwa 4 bis 6 mm und eine axiale Länge von beispielsweise nur 10 bis 20 mm haben.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung einen erfindungsgemäßen Winkelgeber,
- Fig. 2: eine Ansicht eines Magnetringes des Winkelgebers gemäß Fig. 1,
- Fig. 3: in einer Darstellung entsprechend Fig. 1 eine zweite Ausführungsform eines erfindungsgemäßen Winkelgebers,
- Fig. 4: in vergrößerter Darstellung eine Ansicht eines Sensors des erfindungsgemäßen Winkelgebers,
- Fig. 5: eine weitere Ausführungsform eines Sensors des erfindungsgemäßen Winkelgebers,
- Fig. 6: ein Amplituden-Winkel-Diagramm für den Sensor gemäß Fig. 4,
- Fig. 7: die Umsetzung des Amplituden-Winkel-Diagramms gemäß Fig. 6 in ein Sinus-Cosinus-Diagramm,
- Fig. 8: in einer Darstellung entsprechend Fig. 1 eine weitere Ausführungsform eines erfindungsgemäßen Winkelgebers,
- Fig. 9: eine Ansicht einer Magnetscheibe des Winkelgebers gemäß Fig. 8.

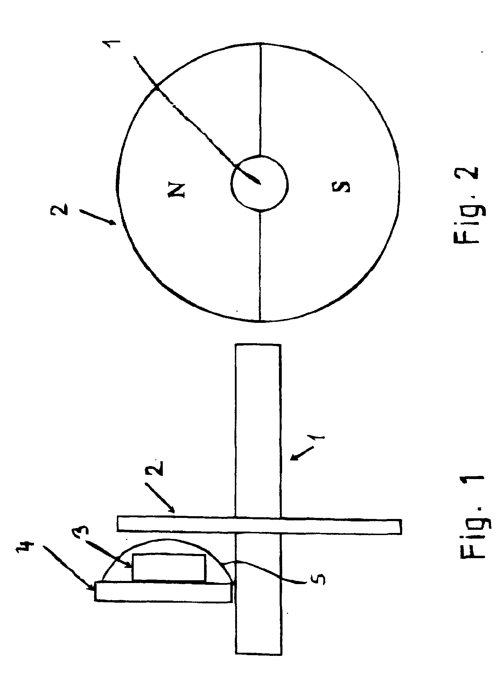

Der Winkelgeber wird in elektrische Kleinmotoren integriert und dient zur exakten Regelung der Drehzahl und Drehrichtung sowie der genauen Positionierung der Kleinmotoren. Der Winkelgeber gemäß den Fig. 1 und 2 weist einen auf einer Motorwelle 1 des (nicht dargestellten) Kleinmotors sitzenden Magnetring 2 auf. Er hat, wie Fig. 2 zeigt, beispielsweise kreisförmigen Umriß und sitzt drehfest auf der Motorwelle 1. Der Magnetring 2 ist stirnseitig an einem Halbkreis mit Nordpol N und am anderen Halbkreis mit Südpol S aufmagnetisiert. Dies kann beispielsweise durch Magnetisierung in diametraler Richtung mit einem homogenen Magnetfeld erfolgen. Der Magnetring 2 hat beispielsweise einen Durchmesser von nur 3 mm.

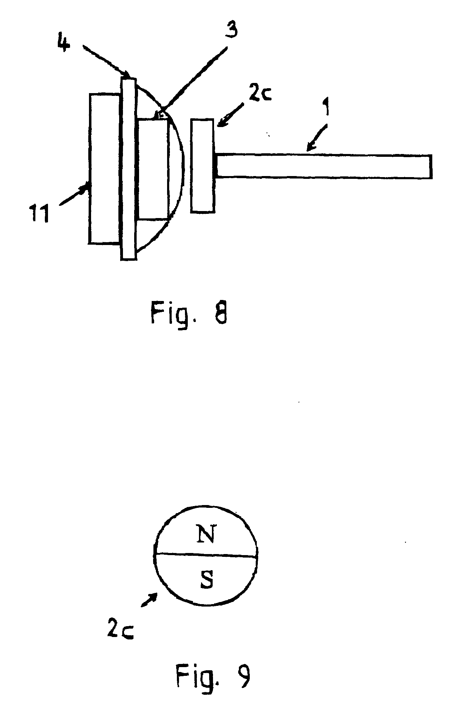

Im Ausführungsbeispiel nach den Fig. 1 und 2 sitzt der Magnetring 2 mit Abstand von den Enden auf der Motorwelle 1. Es ist auch möglich, eine Magnetscheibe 2c (Fig. 8 und 9) an einem Ende der Motorwelle 1 zu befestigen. In diesem Falle wird das Magnetteil 2 nicht von der Motorwelle 1 durchsetzt, so daß es scheibenförmig ausgebildet ist.

Dem Magnetring 2 liegt ein Sensor 3 gegenüber, der vorteilhaft ein Hallsensor oder ein magnetoresistiver Sensor ist. Er sitzt auf einem Träger 4, z.B. PCB, an dem gegebenenfalls auch ein Auswerte-IC 11 (Fig. 8 und 9) vorgesehen sein kann. Er liegt vorteilhaft auf der vom Sensor 3 abgewandten Seite des Trägers 4. Der Sensor 3 liegt vorteilhaft geschützt unter einer Abdeckung 5, die auf dem Träger 4 befestigt ist. Der Sensor 3 erfaßt beim Drehen der Motorwelle 1 das vom Magnetring 2 ausgehende Magnetfeld. Wie Fig. 4 zeigt, hat der Sensor 3 ein horizontales und ein vertikales Sensorelement 6, 7, die einander senkrecht kreuzend angeordnet sind. Die beiden Sensorelemente 6, 7 haben im Ausführungsbeispiel gleichen rechteckigen Umriß und kreuzen einander in halber Länge. Aufgrund der senkrecht zueinander liegenden Sensorelemente 6, 7 liefert der Sensor 3 zwei sinusförmige Signale 8, 9 (Fig. 6), die um 90° zueinander phasenverschoben sind. Aufgrund der Phasenverschiebung von 90° entspricht das Signal 8 einer Sinuskurve und das Signal 9 der entsprechenden Kosinuskurve. Beispielhaft sind in Fig. 6 drei Drehwinkel ϕ₁ bis ϕ₃ eingezeichnet, denen entsprechende Amplitudenwerte zugeordnet werden können. Wie Fig. 7 zeigt, läßt sich auf diese Weise sehr genau der jeweilige Drehwinkel der Motorwelle 1 bestimmen.

Die beiden um 90° verdreht zueinander liegenden Sensorelemente 6, 7 liefern hochwertige Sinus/Cosinussignale, die eine hohe Winkelgenauigkeit ergeben. Die sinusförmigen Signale (Quadratursignale) erlauben die Bestimmung der Absolutposition innerhalb einer ganzen Umdrehung der Motorwelle 1.

Werden als Sensorelement magnetoresistive Sensorelemente verwendet, dann kann die Absolutposition der Motorwelle 1 innerhalb einer halben Umdrehung der Motorwelle genau bestimmt werden.

Die Auswertung der Quadratursignale 8, 9 erfolgt vorzugsweise nach der Verstärkung der Sensorsignale. Hierfür kann ein Interpolatorschaltkreis vorgesehen sein, der vorteilhaft in den Winkelgeber integriert ist und der zwei um 90° phasenverschobene Encodersignale mit einer Impulszahl liefert, die durch den Interpolatorschaltkreis bestimmt wird. Da ein solcher Interpolatorschaltkreis an sich bekannt ist, wird er auch nicht näher beschrieben.

Der Interpolatorschaltkreis kann alternativ auch den Absolutpositionswert ausgeben, zum Beispiel über ein serielles Interface.

Die Auswertung der Quadratursignale nach der Verstärkung kann auch über einen außerhalb des Winkelgebers befindlichen Auswertealgorithmus erfolgen, zum Beispiel im Programm eines Rechners. Bei einer solchen Verfahrensweise sind zusätzliche Korrekturen von systematischen Fehlern möglich, wie zum Beispiel Amplitudenfehler, Offsetfehler oder Nichtsinusförmigkeit. Auf diese Weise kann eine noch höhere Genauigkeit erzielt werden.

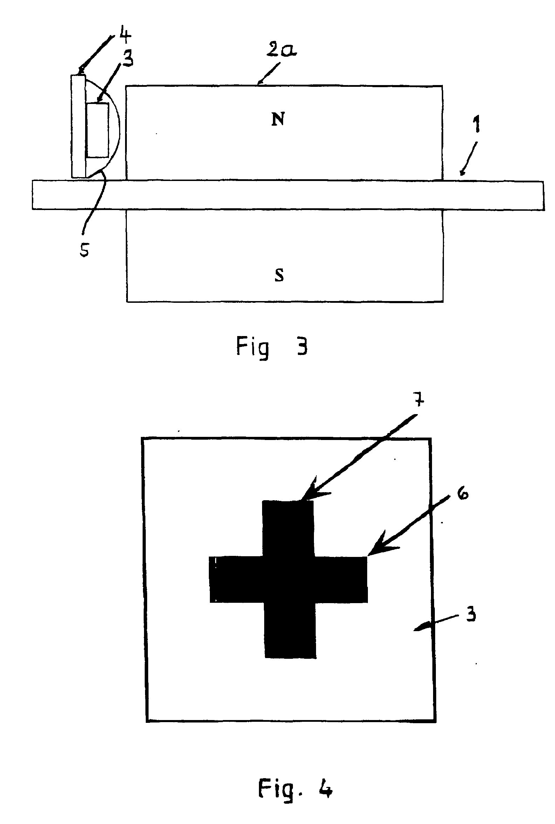

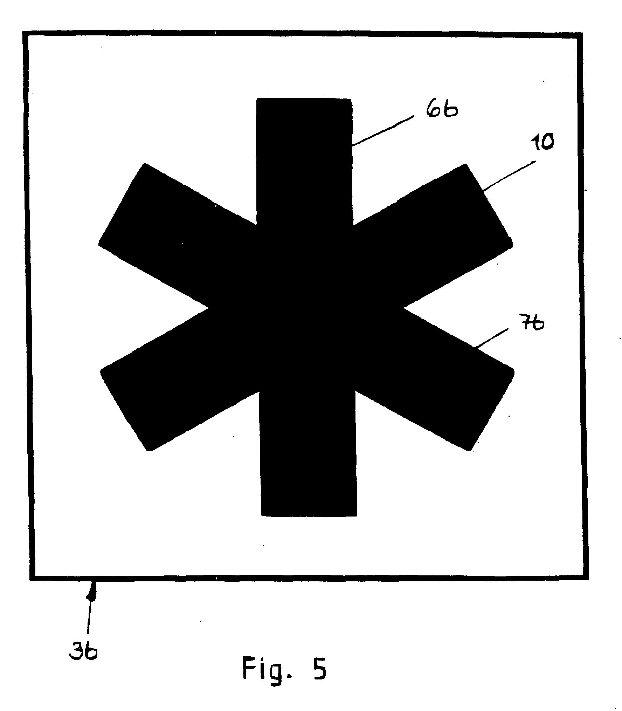

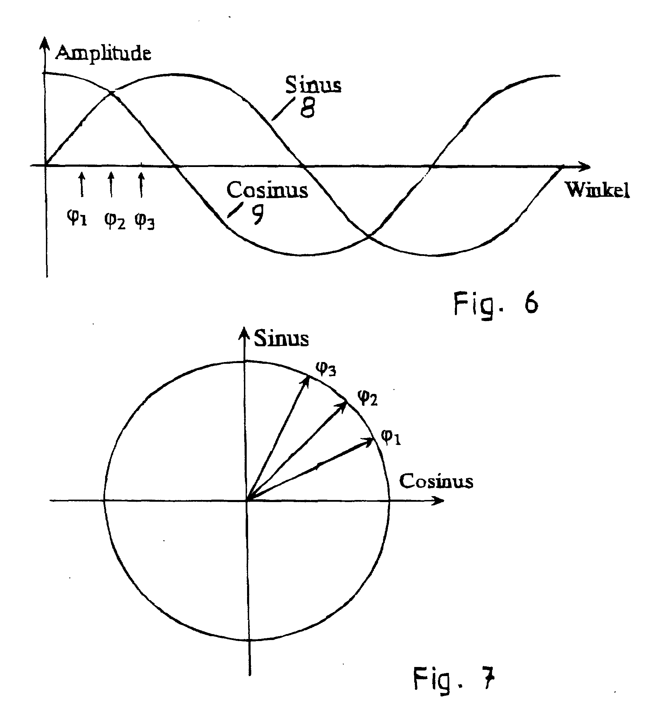

Fig. 3 zeigt eine Ausführungsform, bei der auf der Motorwelle 1 ein Motormagnet 2a drehfest sitzt. Die Motorwelle 1 durchsetzt den Motormagneten 2a zentrisch. Er ist in der einen Hälfte mit Nordpol N und in der anderen Hälfte mit Südpol S aufmagnetisiert. Dem Motormagneten 2a liegt wiederum der Sensor 3 gegenüber, der auf dem Träger 4 unterhalb der Abdeckung 5 sitzt. Der Sensor 3 kann entsprechend der Ausführungsform gemäß Fig. 4 ausgebildet sein.

Bei der Ausführungsform nach den Fig. 8 und 9 sitzt die Magnetscheibe 2c stirnseitig und zentrisch an der Motorwelle 1. Die Magnetscheibe 2c ist entsprechend der Ausführungsform gemäß den Fig. 1 und 2 stirnseitig an einem Halbkreis mit Nordpol N und am anderen Halbkreis mit Südpol S aufmagnetisiert (Fig. 9). Die Magnetscheibe 2c ist zentrisch in axialer Richtung vor dem Sensor 3 angeordnet. Im übrigen ist diese Ausführungsform gleich ausgebildet wie das Ausführungsbeispiel nach den Fig. 1 und 2. Die zentrische Lage der Magnetscheibe 2c führt zu einer sehr kompakten Bauform des Winkelgebers.

Fig. 5 zeigt einen Sensor 3b, der bei den Ausführungsformen nach den Fig. 1 und 2, 3 oder 8, 9 eingesetzt werden kann. Der Sensor 3b hat drei Sensorelemente 6b, 7b, 10, die jeweils gleich ausgebildet sind und Rechteckform haben. Die drei Sensorelemente 6b, 7b, 10 sind einander in halber Länge kreuzend um jeweils 60° versetzt zueinander angeordnet. Dementsprechend liefert dieser Sensor 3b drei sinusförmige Signale, die jeweils um 120° elektrisch zueinander phasenverschoben sind.

Die beschriebenen Winkelgeber zeichnen sich durch einen sehr kompakten Aufbau aus, da die Sensoren 3, 3b sehr kleine Abmessungen haben. Ihre senkrecht zur Motorwelle 1 gemessene Abmessung beträgt beispielsweise nur etwa 1,5 mm. Der Sensor 3, 3b liegt mit geringem Abstand dem Magnetring 2 bzw. dem Motormagneten 2a gegenüber und hat nur geringen Abstand von der Motorwelle 1. Sind die Sensoren 3, 3b als vertikale Hallsensoren ausgebildet, wie in den Ausführungsbeispielen dargestellt, zeichnet sich der Winkelgeber durch eine hohe Auflösung und eine hohe Genauigkeit aus. Auch wenn die Sensoren 3, 3b als magnetoresistive Sensoren ausgebildet sind, ergibt sich bei äußerst kompaktem Aufbau eine hohe Auflösung und Genauigkeit.

Die Winkelgeber können in einen bürstenlosen oder einen bürstenbehafteten Gleichstromkleinmotor mit eisenloser Wicklung integriert sein. Die sinusförmigen Signale 8, 9 werden als Teil des Winkelgebers entweder innerhalb des Kleinmotors oder auch außerhalb von ihm ausgewertet.

Die Auswertung der Signale 8, 9 kann außer in einem Interpolatorschaltkreis auch in einem Mikroprozessor, einer digitalen Logik oder dergleichen erfolgen.

Die Auswertung der Sensorsignale kann so erfolgen, daß das Ausgangssignal die Absolutposition der Motorwelle 1 innerhalb eines ganzzahligen Teiles einer Umdrehung der Motorwelle 1 angibt. Vorteilhaft gibt das Ausgangssignal die Absolutposition der Motorwelle 1 innerhalb einer Umdrehung an.

## Patentansprüche

1. Winkelgeber, der in einen elektrischen Kleinmotor integriert und mit mindestens einem Magnetteil versehen ist, das stirnseitig abwechselnd angeordnete Pole aufweist und dem wenigstens ein Sensor gegenüberliegt, und der phasenverschobene Signale liefert,
**dadurch gekennzeichnet, daß** der Sensor (3, 3b) wenigstens zwei Sensorelemente (6, 7; 6b, 7b, 10) aufweist, die winklig zueinander liegen.

2. Winkelgeber nach Anspruch 1,
**dadurch gekennzeichnet, daß** die Sensorelemente (6, 7) um 90° gegeneinander verdreht sind.

3. Winkelgeber nach Anspruch 1,
**dadurch gekennzeichnet, daß** die Sensorelemente (6b, 7b, 10) um 60° gegeneinander verdreht sind.

4. Winkelgeber nach einem der Ansprüche 1 bis 3,
**dadurch gekennzeichnet, daß** die Sensorelemente (6, 7; 6b, 7b, 10) einander kreuzen.

5. Winkelgeber nach einem der Ansprüche 1 bis 4,
**dadurch gekennzeichnet, daß** der Sensor (3, 3b) ein vertikaler Hallsensor ist.

6. Winkelgeber nach einem der Ansprüche 1 bis 4,
**dadurch gekennzeichnet, daß** der Sensor (3, 3b) ein magnetoresistiver Sensor ist.

7. Winkelgeber nach einem der Ansprüche 1 bis 6,
**dadurch gekennzeichnet, daß** das Magnetteil (2) ein Ring ist, der von einer Motorwelle (1) durchsetzt ist.

8. Winkelgeber nach einem der Ansprüche 1 bis 6,
**dadurch gekennzeichnet, daß** das Magnetteil (2c) eine Scheibe ist, die stirnseitig an einem Ende der Motorwelle (1) befestigt ist.

9. Winkelgeber nach einem der Ansprüche 1 bis 6,
**dadurch gekennzeichnet, daß** das Magnetteil (2a) ein drehfest auf der Motorwelle (1) sitzender Motormagnet ist.

10. Winkelgeber nach einem der Ansprüche 1 bis 9,
**dadurch gekennzeichnet, daß** die vorzugsweise sinusförmigen Ausgangssignale (8, 9) des Sensors (3, 3b) einer Auswerteeinheit zugeführt werden.

11. Winkelgeber nach Anspruch 10,
**dadurch gekennzeichnet, daß** die Ausgangssignale (8, 9) um 90° phasenverschoben sind.

12. Winkelgeber nach Anspruch 10,
**dadurch gekennzeichnet, daß** die Ausgangssignale (8, 9) um 120° phasenverschoben sind.

13. Winkelgeber nach einem der Ansprüche 10 bis 12,
**dadurch gekennzeichnet, daß** die Auswerteeinheit ein Mikroprozessor ist.

14. Winkelgeber nach einem der Ansprüche 10 bis 12,
**dadurch gekennzeichnet, daß** die Auswerteeinheit eine digitale Logik ist.

15. Winkelgeber nach einem der Ansprüche 10 bis 12,
**dadurch gekennzeichnet, daß** die Auswerteeinheit ein Interpolatorschaltkreis ist.

16. Winkelgeber nach einem der Ansprüche 10 bis 15,
**dadurch gekennzeichnet, daß** das Ausgangssignal (8, 9) die Absolutposition innerhalb eines ganzzahligen Teils einer Umdrehung der Motorwelle (1) angibt.

17. Winkelgeber nach einem der Ansprüche 10 bis 16,
**dadurch gekennzeichnet, daß** das Ausgangssignal (8, 9) die Absolutposition innerhalb einer Umdrehung der Motorwelle (1) angibt.

18. Winkelgeber nach einem der Ansprüche 1 bis 17,
**dadurch gekennzeichnet, daß** der Kleinmotor ein bürstenloser oder ein bürstenbehafteter Gleichstromkleinmotor mit eisenloser Wicklung ist.

19. Winkelgeber nach einem der Ansprüche 10 bis 18,
**dadurch gekennzeichnet, daß** die Auswerteeinheit innerhalb des Kleinmotors untergebracht ist.

20. Winkelgeber nach einem der Ansprüche 10 bis 18,
**dadurch gekennzeichnet, daß** die Auswerteeinheit außerhalb des Kleinmotors untergebracht ist.
